# EUROPÄISCHE PATENTANMELDUNG

(11) **EP 2 722 543 A1**
(43) Veröffentlichungstag der Anmeldung: **23.04.2014**
(21) Anmeldenummer: 12007276.4
(22) Anmeldetag: 22.10.2012
(51) Int. Cl.: F16C 33/78

(54) **Lageranordnung mit Beschlchtung oder Auftragsschicht**

(71) Anmelder: IMO Holding GmbH, 91350 Gremsdorf (DE)
(72) Erfinder: Klinik, Elfriede, 91056 Erlangen (DE)
(74) Vertreter: Küchler, Stefan

(57) **Zusammenfassung**

Die Erfindung betrifft eine Lageranordnung (10), insbesondere zur gegeneinander verdrehbaren Lagerung mindestens zweier Ringe (20 ; 30), vorteilhafterweise zur Lagerung von Ringen aus metallischem Material, aufweisend: wenigstens eine, vorzugsweise eine sich ringförmig oder zumindest ringsegmentförmig um eine Mitten- oder Rotationsachse (R) erstreckende, Materialausnehmung (A), alternativ ausgeführt als Senke oder Aussparung (5), beispielsweise in Form einer nut- oder kuhlenartigen Vertiefung mit definierter Einbringungstiefe (Z) und mit definierter Einbringungsbreite (Y) auf mindestens einer der Oberflächen (2) der Ringe (20 ; 30), vorzugsweise auf einer der radialen- oder axialen Oberflächen (2) mindestens eines Rings (20 ; 30), wobei die Materialausnehmung (A) oder Senke bzw. Aussparung (5) mit Füllmaterial (4) befüllt ist oder befüllt werden kann.

## Beschreibung

Die Erfindung betrifft eine Lageranordnung zur gegeneinander verdrehbaren Lagerung mindestens zweier Ringe - vor Allem zur Lagerung von Ringen aus metallischem Material wie beispielsweise 25CrMo4, 42CrMo4, 43CrMo4, 34CrNiMo6, C45, C45N, X20Cr13, GG-20, GGG-40, GS15, St 37, sowie Edelstahl oder Halbedelstahl. An diese gegeneinander verdrehbar gelagerten Ringe sind Anschlusskonstruktionen angebracht. Solche Anschlusskonstruktionen können Teile von energiewandelnden oder energieerzeugenden Anlagen sein, beispielsweise Blatt- oder Nabenkonstruktionen von Windenergieanlagen, oder auch maschinenbauliche Teile in oder auf Fahrzeugen, Werkzeugmaschinen, Schwerlastmaschinen, Transportmaschinen oder Kränen, oder gar in oder auf Anlagen im 'offshore'-Betrieb. Die Erfindung ist charakterisiert durch mindestens eine sich ringförmig oder zumindest ringsegmentförmig um eine Mitten- oder Rotationsachse erstreckende Materialausnehmung, welche auch als kaum erkennbare Senke oder Aussparung ausgeführt sein kann, beispielsweise in Form einer nut- oder kuhlenartigen Vertiefung mit definierter Einbringungstiefe und mit definierter Einbringungsbreite. Diese Ausnehmung ist mit Füllmaterial befüllt oder kann mit einem solchen befüllt werden, insbesondere um zumindest einseitig eine gegenüber dem übrigen metallischen Ringmaterial verschleißhärtere und/ oder korrosionsbeständigere Oberfläche oder Auftragsschicht auszubilden. Diese Ausnehmung ist auf mindestens einer der Oberflächen des o.g. Rings oder der o.g. Ringe an- oder eingebracht, vorzugsweise auf einer der radialen- oder axialen Oberflächen. Weitere Merkmale ergeben sich aus den Patentansprüchen.

Problemstellung und Stand der Technik:
Heutige Lageranordnungen, d.h. Wälzlager oder Drehverbindungen, verfügen meistens zumindest über eine Dichtlippe, welche einen sogenannten Spalt oder Lagerspalt zwischen den beiden gegeneinander verdrehbaren Lagerringen gegenüber der Umwelt abdichtet und ferner das Eindringen von Schmutz und Fremdpartikeln aus der Umwelt in die Lageranordnung oder in das Laufbahnsystem vermindert oder verhindert. Problematisch in der Praxis ist dabei, eine gute Synergie zwischen Aufwand/ Kosten des Dichtungssystems und der gewünschten - möglichst hohen oder guten - Abdichtwirkung zu finden. Gute Abdichtungssysteme mit vorzüglichen Dichtungscharakteristika sind in der Regel aufwändiger und somit teurer ausgestaltet als verhältnismäßig einfache und kostengünstige Dichtungssysteme.

So weist beispielsweise ein komplexes dreiteiliges Dichtungssystem, welches realisiert wird durch eine reguläre im Spalt bzw. Lagerspalt positionierte Dichtlippe und eine weitere Spaltdichtung sowie eine zusätzliche aus Dichtungswerkstoff bestehende Dichtung mit einem fixierend wirkend angebrachten Edelstahlband gemäß der EP 1920176 eine hervorragende Dichtwirkung auf. Dieses Dichtungssystem ist jedoch teuer und im Retrofit-Falle nicht trivial einzusetzen bzw. nur aufwendig zu montieren, da mehrere Einzelteile benötigt werden. Dieses System funktioniert insbesondere dann sehr gut abdichtend, wenn die Dichtung an einer radialen Fläche anläuft. Diese Anlauffläche ist in der heutigen Praxis häufig zumindest vorbehandelt und/ oder beschichtet, beispielsweise mittels Schleifen oder polierten vorbehandelt oder durch Flammspritzen einer aufgebrachten Zinkschicht behandelt.

Ist eine derartige vorbehandelte oder behandelte Lageranordnung in besonders aggressiven Umgebungen im Einsatz wenn gleichzeitig eine hohe mechanische Beanspruchung der Oberflächen erfolgt, beispielsweise wenn die Oberfläche der Lageranordnung mechanisch beansprucht wird und gleichzeitig diese Lageranordnung in Medien oder Gasgemischen im Einsatz ist während die klimatischen Umgebungsverhältnisse eine Korrosion fördern, so zeigt sich mitunter, dass die Zinkschicht nicht genügend verschleißbeständig ist und abgenutzt oder verschlissen werden kann. Um die Dichtheit des Dichtungssystem auch unter solchen widrigen Bedingungen zu gewähren ist es notwendig, die Dichtlippe mit einem gewissen Anpressdruck auf den Ring oder auf den Ring mit Zinkschicht zu versehen. Es ist in der Regel ein nennenswerter Anpressdruck vonnöten, um die Dichtheit des Dichtungssystem nachzuhalten. Liegt die Dichtung jedoch mit zu hohem Druck an, verschleißen nach einer gewissen Anzahl von Betriebsstunden die unter Anpreßdruck stehenden Flächen oder Kanten und die, teilweise abgenutzte oder verschlissene, Dichtlippe kann in die Zink- oder Oberflächenschicht eingraben. Eine bisherige Maßnahme zur Lösung des oben genannten Problems in der Betriebspraxis ist es, die unter Anpreßdruck stehende Dichtlippe zu unterfetten oder mit einem Schmiermittel zu versehen. Diese Maßnahme gewährleistet jedoch nur einen temporären Verschleißschutz. Ist beispielsweise das Schmiermittel infolge der Reibung und des Anpressdrucks wieder abgetragen, so liegt die unter Anpressdruck stehende Oberfläche wieder "blank" und ist erneut anfällig für Korrosion und/ oder für erhöhten Verschleiß. Durch kontinuierliche oder zumindest regelmäßige Wiederherstellung der Schmierung kann das genannte Verschleiß- oder Abnutzungsproblem, zumindest für eine nächste begrenzte Zeitperiode, wieder vermindert werden. Eine alternative Lösung ist die Verminderung des Anpressdruckes, welche jedoch auch die Dichtheit des Systems an sich vermindert.

Es existiert jedoch nach heute bekanntem Stand der Technik keine Anwendung, welche eine permanente Schmierung der beanspruchten und unter Anpressdruck stehenden Oberflächen gut löst. Die bisher übliche Praxis zielt darauf ab, entweder die Nachschmierintervalle zu automatisieren und/ oder zu verkürzen - oder aber es zielt die bisher übliche Praxis darauf ab, die metallischen Ringe einer Lageranordnung grundsätzlich ab Werk mit einer gehärteten oder "verschleißsicheren" Gesamtoberfläche zu versehen. Beides kostet in der Praxis Geld oder verursacht zumindest Wartungsaufwände und ist somit nachteilig. Abgesehen davon löst die bisher übliche Praxis das Verschleiß- oder Abnutzungsproblem an den Dichtungsanlaufflächen erfahrungsgemäß nicht wirklich zuverlässig. Aufgabenstellung und Erfindungsbeschreibung:
Aus dem soeben geschilderten Verschleiß- oder Abnutzungsproblem, insbesondere an den Dichtungsanlaufflächen einer Lageranordnung, d.h. eines Wälzlagers oder
eine Drehverbindung, resultiert das die Erfindung initiierende Problem, eine - zumindest an den Dichtungsanlaufflächen - wesentlich verschleiß- oder
abnutzungssichere Lageranordnung mit guter Oberflächenbeschaffenheit zu schaffen. Im Sinne der Aufgabenstellung liegt daher auch, dass diese wesentlich verschleiß- oder abnutzungssichere Lageranordnung eine erhöhte

Korrosionsbeständigkeit aufweisen muss und sich beispielsweise somit ideal für den Einsatz in Anwendungen in aggressiven Umgebungsmedien oder sogar unter Wasser eignet. An den Korrosionsschutz der Dichtungsanlauffläche wird im Sinne dieser Aufgabenstellung die Anforderung gestellt, eine definierte Oberflächenbeschaffenheit und eine gewisse Verschleißbeständigkeit bzw. Härte aufzuweisen: Die Oberflächenbeschaffenheit der Dichtungsanlauffläche am Metallring darf jedoch nicht zu rau sein, sonst verschleißt die Dichtung welche mit gewissem Anpressdruck angedrückt wird, zu schnell.

Dabei ist aus maschinenbaulichen Praxis anderer Anwendungen, beispielsweise aus der Eisenbahntechnik, zwischenzeitlich bekannt, dass mitunter Räder mit reibungs- und verschleißarmer Beschichtung ausgeführt wurden oder ausgeführt werden. So offenbart etwa die DE 19615245 ein Verfahren und eine Vorrichtung zur Beschichtung eines mit Spurkranz versehenen Schienenfahrzeug-Metallrades. Dabei soll jenes Metallrad verbesserte Eigenschaften in Bezug auf Verschleiß und Reibung aufweisen und die entsprechende Beschichtung soll sowohl bei neuen Metallrädern, wie auch im wiederholten Falle bei bereits im Betrieb verschlissenen Metallrädern aufgebracht werden können. Hintergrund dieses Verfahrens bzw. dieser Vorrichtung war der (kontinuierliche) Verschleiß, welchem im Eisen- und Straßenbahn verwendete Schienenfahrzeug-Metallräder unterliegen.

Lageranordnungen, d.h. Wälzlager und Drehverbindungen, grenzen sich in der maschinenbautechnischen Anwendung von Schienenfahrzeug-Metallrädern, welche als Fortbewegungsmittel im Eisen- und Straßenbahnbetrieb verwendet werden, durch eine Vielzahl von technischen Eigenschaften eindeutig ab. Darüber hinaus ist es besonders für den Einsatz von Bauteilen im 'offshore'- Bereich oder sogar beim Einsatz von Lageranordnungen unter Wasser von extremer Wichtigkeit, erhöhte Anforderungen an den Korrosionsschutz zu erfüllen. Bei Drehverbindungen, die beispielsweise in Windkraftanlagen oder in Gezeitenkraftwerken eingesetzt werden, stellt die Dichtungsanlauffläche bisher eine Schwachstelle dar. Normalerweise ist nach aktuellem Stand der Technik die Drehverbindung mit einem Korrosionsschutz versehen, der aus mehrfachen Schichten besteht. Dennoch läuft die Dichtung auf dem ungeschützten Grundmaterial und es ergeben sich die oben genannten Verschleiß- oder Abnutzungsprobleme.

Die Lösung der oben genannten Aufgabenstellung wird hervorragend erreicht, wenn eine erfindungsgemäße Lageranordnung entsprechend der vorliegenden Erfindung, nachfolgend beschrieben, eingesetzt wird:
Die erfindungsgemäße Lageranordnung zur Verringerung des Verschleiß- oder Abnutzungsproblems dient insbesondere zur gegeneinander verdrehbaren Lagerung mindestens zweier Ringe, vorteilhafterweise zur gegenseitigen Lagerung von (Lager-)Ringen aus metallischem Material, und umfasst wenigstens eine, vorzugsweise eine sich ringförmig oder zumindest ringsegmentförmig um eine Mitten- oder Rotationsachse erstreckende, Materialausnehmung, welche alternativ ausgeführt sein kann als Senke oder Aussparung, beispielsweise in Form einer nut- oder kuhlenartigen Vertiefung mit definierter Einbringungstiefe und mit definierter Einbringungsbreite auf mindestens einer der Oberflächen der behandelten oder vorbehandelten Oberflächen der Lagerringe.

Im Sinne der Lehre der Erfindung wird diese Materialausnehmung vorzugsweise auf einer der radialen - oder axialen Oberflächen mindestens eines der Lagerringe aufgebracht oder vorteilhafterweise durch spanende Fertigungsverfahren oder alternativ durch Gußtechnik erzeugt, wobei die Materialausnehmung oder Senke bzw. Aussparung mit Füllmaterial befüllt ist oder zumindest mit Füllmaterial befüllt werden kann.

Im Sinne der vorliegenden Erfindung wird vorzugsweise eine solche befüllte Materialausnehmung oder Senke bzw. Aussparung in der Nähe einer Kante oder direkt angrenzend an wenigstens eine Kante angebracht oder eingebracht - und zwar beispielsweise exakt dort, wo etwa die Dichtlippe an den (Lager-)Ring drückt oder an selbigen angepresst wird. Die Dichtlippe läuft also grundsätzlich in der Nähe der Materialausnehmung- oder Aussparung an.

Alternativ ist die oben genannte Materialausnehmung oder Senke bzw. Aussparung in etwa mittig zwischen zwei Kanten mindestens eines der Lagerringe an- oder eingebracht. Die Einbringungstiefe der Materialausnehmung oder Senke bzw.

Aussparung beträgt im Falle eines voluminösen Füllmaterials wenigstens 0,25 mm, vorzugsweise jedoch mehr als 1 mm, idealerweise 2 mm oder mehr.

Die Einbringungsbreite der Materialausnehmung oder Senke bzw. Aussparung beträgt hingegen wenigstens 1 mm, vorzugsweise jedoch mehr als 5 mm oder gar mehr als 10 mm.

Wird ein wenig voluminöses Füllmaterial wie etwa ein Lack oder Emaille-Material verwendet, so empfiehlt sich die Einbringung des Füllmateriales hingegen überwiegend als Auftragsschicht, d.h. mit nur einer geringen Eindringtiefe der Materialausnehmung oder Senke bzw. Aussparung

Im Sinne der Erfindung ist die genannte Materialausnehmung oder Senke bzw. Aussparung in Form einer, zumindest segmentweise, ringförmig umlaufenden Vertiefung ausgeführt (beispielsweise in Form einer nut- oder kuhlenartigen Vertiefung mit definierter Einbringungstiefe und mit definierter Einbringungsbreite) und befüllt mit vorzugsweise metallischem oder einem Metall beinhaltenden Material, welches zumindest den größten Teil des Volumens der Materialausnehmung oder der Senke bzw. Aussparung ausfüllt.

Dieses Füllmaterial kann gegebenenfalls in axialer und/ oder in radialer Richtung über den Rand der vorgenannten Materialausnehmung hervorspringen, sodass sich ein Überstand gegenüber der axialen bzw. radialen Ringoberfläche ergibt. In der Regel und in der vorzugsweisen Ausführungsform der Erfindung ist dieses Füllmaterial beispielsweise ein metallisches Material, welches auf der Oberfläche des Ringes einen metallischen Glanz bewirkt, solange diese Oberfläche nicht angelaufen oder oxidiert ist. In weiteren Ausgestaltungen der Erfindung kann dieses Füllmaterial jedoch auch andere Materialien oder Werkstoffe beinhalten oder sogar aus nichtmetallischen Materialien oder Werkstoffen bestehen, sogar gegebenenfalls aus organischen Materialien oder Verbundwerkstoffen.

Vorzugsweise jedoch ist dieses Füllmaterial eine Metalllegierung aus geschmolzenen Metallpulver, idealerweise beinhaltend Nickel-Anteile und/ oder Chrom-Anteile und/oder Eisen-Anteile und/ oder Wolfram-Anteile und/oder

Kupfer-Anteile und/ oder Bor-Anteile und/ oder Silizium-Anteile und/ oder Phospohor-Anteile, gegebenenfalls beinhaltend auch Anteile eines Flussmittels, welches bei der Herstellung der Metalllegierung aus einem Metallpulver zumeist benötigt wird.

Jenes Füllmaterial ist folglich vorzugsweise eine aufgeschmolzene Metalllegierung aus einem Metallpulver mit zwischen 2 bis 15 Vol.-% Chrom-Anteilen oder gar mit bis zu 25 Vol.-% Chrom-Anteilen, alternativ eine aufgeschmolzene Metalllegierung aus Nickel-Bor-Silizium mit gegebenenfalls Chrom- bzw. Kupferanteilen.

Jenes Füllmaterial besteht, wie vorgenannt, alternativ aus keramischen und/ oder anorganischen Werkstoffen, wobei ein solcher anorganischer Werkstoff oder solche Werkstoffe hauptsächlich aus Silikaten und Oxiden besteht/en, wie beispielsweise Glas- oder Emaille.

Es ist im Sinne einer solchen alternativen Ausprägungsform der Erfindung, dass das Füllmaterial ein organisches Material, beispielsweise Kunststoff(e), beinhaltet oder gar überwiegend oder ausschließlich aus einem solchen organischen Material besteht, insbesondere aus verschleiß- und temperaturbeständigen Kunststoff(en), wie beispielsweise Polyetheretherketon (PEEK), alternativ aus Fluorpolymeren oder deren Mischungen, beispielsweise aus Polytetrafluorethylen (PTFE bzw. PTFE-Compounds), oder aus Perfluoralkoxypolymeren (PFA), oder gar aus Polyethylen (PE).

In einer weiteren alternativen Ausprägungsform ist das Füllmaterial ein Verbundwerkstoff welcher gegebenenfalls mit geeigneten Mitteln, beispielsweise mit Mitteln des Formschlusses - etwa in Ausprägung einer Schwalbenschwanzgeometrie - oder mit Mitteln des Kraftschlusses - etwa in Ausprägung jeweils einer Schraubung oder Nietung - an einem Lagerring befestigbar ist. In dieser weiteren alternativen Ausprägungsform ist darauf zu achten, dass der Verbundwerkstoff insbesondere unverrutschbar am Ring befestigbar ist.

Grundsätzlich bildet das Füllmaterial im Sinne der technischen Lehre der Erfindung eine gegenüber dem Material des wenigstens einen Lagerringes oder gegenüber der Ringoberfläche eines der Lagerringe korrosions- und/ oder verschleißbeständige Beschichtung oder Auftragsschicht. Diese Beschichtung oder Auftragsschicht kann beispielsweise über eine Gesamtschichtdicke zwischen 0,2 mm und 7,5 mm, verfügen.

Als besonders vorteilhaft hat sich eine Gesamtschichtdicke des Füllmateriales zwischen 0,5 mm und 2,0 mm herausgestellt. Diese Gesamtschichtdicke des Füllmateriales in der Materialausnehmung oder die Gesamtschichtdicke der Beschichtung oder Auftragsschicht wird in axialer Richtung etwa der Einbringungstiefe der Materialausnehmung entsprechen, gegebenenfalls wird die Gesamtschichtdicke des Füllmaterials geringfügig gegenüber der Ringoberfläche überstehen. Vorteilhafterweise wird ein solcher Überstand etwa 0,1 bis 5 mm betragen.

Anstatt eines solchen Überstandes kann das Volumen des Füllmaterials in der Materialausnehmung auch nur annähernd dem Volumen der Materialausnehmung entsprechen, d.h. volumenbezogen etwas geringer sein, sodass sich in der Materialausnehmung selbst nach dem Einbringen des Füllmateriales kein Überstand gegenüber Ringoberfläche ergibt sondern vielmehr eine Furche oder Vertiefung.

Im Sinne der Erfindung ist das Füllmaterial oder die Beschichtung oder die Auftragsschicht eine gegenüber dem Material des wenigstens einen Lagerringes korrosions- und/ oder verschleißbeständige Schicht mit einer mittleren Oberflächen-Schichthärte im groben Bereich zwischen 250 und 860 Härte Vickers (HV), respektive zwischen 22 und 66 Härte Rockwell (HRC).

Vorzugsweise jedoch befindet sich die Oberflächen-Schichthärte im Bereich zwischen 345 HV - 520 HV bzw. zwischen 35 HRC - 50 HRC.

Die Lagerringe der Lageranordnung sind im Sinne der Aufgabenstellung und der Erfindung insbesondere dann gut einsetzbar, wenn der Werkstoff wenigstens eines

Lagerringes einem der folgenden Werkstoffe entspricht: 25CrMo4, 42CrMo4, 43CrMo4, 34CrNiMo6, C45, C45N, X20Cr13, GG-20, GGG-40, GS15, St 37, oder gar auch Edelstahl oder Halbedelstahl.

Die erfindungsgemäße Lageranordnung ist grundsätzlich mit kugel-, zylinderrollen-, tonnenrollen-, oder kegelrollenförmigen Wälzkörpern ausgestattet und vorzugsweise als Wälzlager oder Momentenlager oder Großwälzlager ausgeprägt. Alternativ ist diese Lageranordnung als Drehverbindung ausgestaltet, beispielsweise für den Einsatz in oder auf Fahrzeugen, Werkzeugmaschinen, Schwerlastmaschinen, Transportmaschinen oder Kränen, in Windkraftanlagen oder energietechnischen Anlagen, sowie ,offshore' oder ,onshore', jeweils zwecks Relativverstellung mehrerer an- oder gegeneinander gelagerter Ringe, insbesondere zweier an- oder gegeneinander gelagerter Wälzlagerringe.

Die Materialausnehmung in oder auf der Lageranordnung ist mit dem vorgenannten Füllmaterial vorteilhafterweise beispielsweise so befüllt, dass das Füllmaterial den korrespondierenden Gegenpart zu mindestens einer Dichtlippe bildet, welche im Betrieb der Lageranordnung an einen der Ringe angepresst wird mit dem Ziel, einen stets vorhandenen Lagerspalt abzudichten.

Bei Relativverstellung der gegeneinander verdrehbaren Lagerringe kontaktiert daher die mindestens eine Dichtlippe am Füllmaterial und liegt daran in der Regel mit einem gewissen Anpressdruck, vorzugsweise abdichtend, an. Dabei weist die Materialausnehmung bzw. Senke oder Aussparung einen Randabstand zur Kante des Lagerringes von vorzugsweise wenigstens 0,5 mm auf. In weiteren Ausgestaltungsformen kann dieser Randabstand höhere Werte annehmen, beispielsweise mindestens 2,5 mm oder mindestens 5 mm.

Die Einbringungstiefe der Materialausnehmung bzw. Senke oder Aussparung beträgt in einem zu bevorzugenden Anwendungsfall der Erfindung höchstens 0,25 mm oder ist gegebenenfalls sogar kaum messtechnisch erfassbar. In einem solchen bevorzugenden Anwendungsfall der Erfindung ist von einer Auftragsschicht zu sprechen. Eine solche Auftragsschicht auf der jeweiligen Oberfläche ist beispielsweise unter Ausprägung eines stetig ausgebildeten oder gekrümmt/konvex

ausgebildeten oder stufenhaft ausgebildeten Überstandes des Füllmateriales gegenüber der Ringoberfläche aufgebracht.

Ferner ist im Sinne der technischen Lehre der Erfindung, wenn sich unterhalb der Materialausnehmung oder unterhalb des Füllmaterials im Material des wenigstens einen Lagerringes eine Übergangszone oder Übergangsschicht mit geändertem Gefüge ergibt. Beispielsweise ergibt sich eine in axialer Richtung 1-2 mm dicke und etwa ellipsen- oder linsenförmige Übergangszone oder Übergangsschicht mit einer Härte zwischen 50 HRC - 60 HRC. Diese Übergangszone oder Übergangsschicht mit geändertem Gefüge ist in der Regel stets dann vorhanden, wenn das Füllmaterial unter Einwirkung großer Wärme oder Hitze eine zumindest vorübergehende Zustandsänderung erfährt. Dies ist bei dem Aufschmelzen eines Metallpulvers in der Regel stets gegeben.

Im grundsätzlichen Sinne der technischen Lehre der Erfindung wird das Füllmaterial oder die Beschichtung bzw. die Auftragsschicht durch Auftragsschweißen auf- oder eingebracht. Eine weitere Möglichkeit der Auf- oder Einbringung ist die Einbringung eines vorzugsweise metallischen Beschichtungspulvers mittels induktiver Erwärmung, wobei durch die Erwärmung bei über 500 °C das sogenannte Metallpulver aufgeschmolzen wird und sich gleichmäßig und weitestgehend homogen in der Materialausnehmung oder Senke bzw. Aussparung verteilt.

Wird ein solches metallisches Beschichtungspulver oder das sog. Metallpulver jedoch gar als nass aufgetragenes und anschließend getrocknetes Emaille auf- oder eingebracht, so ist anstatt einer induktiven Erwärmung auch eine Erwärmung unter Verwendung von Porenbrennertechnologie denkbar und im Sinne der Erfindung sowie vorteilhaft.

Wird in einer weiteren Ausprägungsform der Erfindung ein organisches Füllmaterial wie beispielsweise oben genannter Kunststoff verwendet, so kann eine solche Kunststoffschicht mittels dem Fertigungsverfahren der Hybridtechnik direkt auf das Bauteil, den Metallring, auf- oder eingespritzt werden. Die Einbringung eines organischen Füllmaterials als Kunststoffpulver ist ebenso möglich und im Sinne der

Erfindung, insbesondere wenn das Kunststoffpulver als Polymer bei unter 500°C im Ofen geschmolzen wird. In einer noch weiter entfernten Ausprägungsform der Erfindung gehören auch Lacke, die unter UV- oder Elektronenstrahlung aushärten können, zum erfindungsgemäßen Füllmaterial und können im Sinne der Erfindung eingesetzt werden.

Denkbar ist ferner auch die Auf- oder Einbringung einer chemisch abgeschiedenen Metallschicht in die Materialausnehmung oder Senke bzw. Aussparung.

Weitere Vorteile uns Ausgestaltungsformen ergeben sich aus den folgend beispielhaft angeführten Zeichnungen. Dabei zeigen beispielhaft:

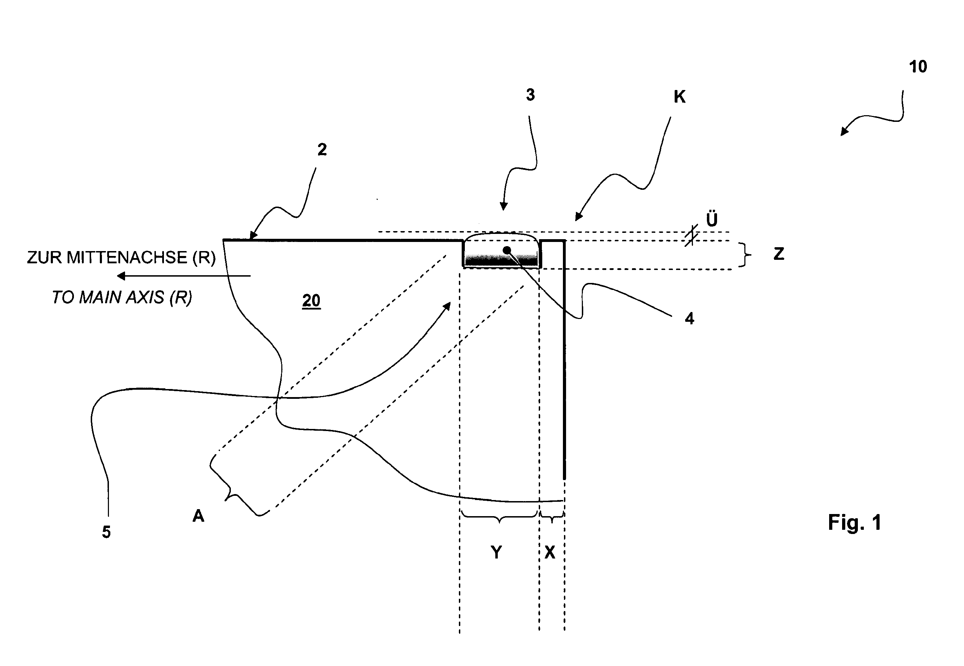

Fig. 1 einen Ausschnitt (Detail) einer Lageranordnung im Querschnitt an der Kante eines der Ringe oder Lagerringe, beinhaltend die Materialausnehmung und Füllung bzw. Beschichtung/ Auftragsschicht mit Füllmaterial. Dabei weist Letztere einen Überstand gegenüber der Ringoberfläche auf, sodass die Dichtungsanlauffläche gegenüber der Ringoberfläche erhaben ist.

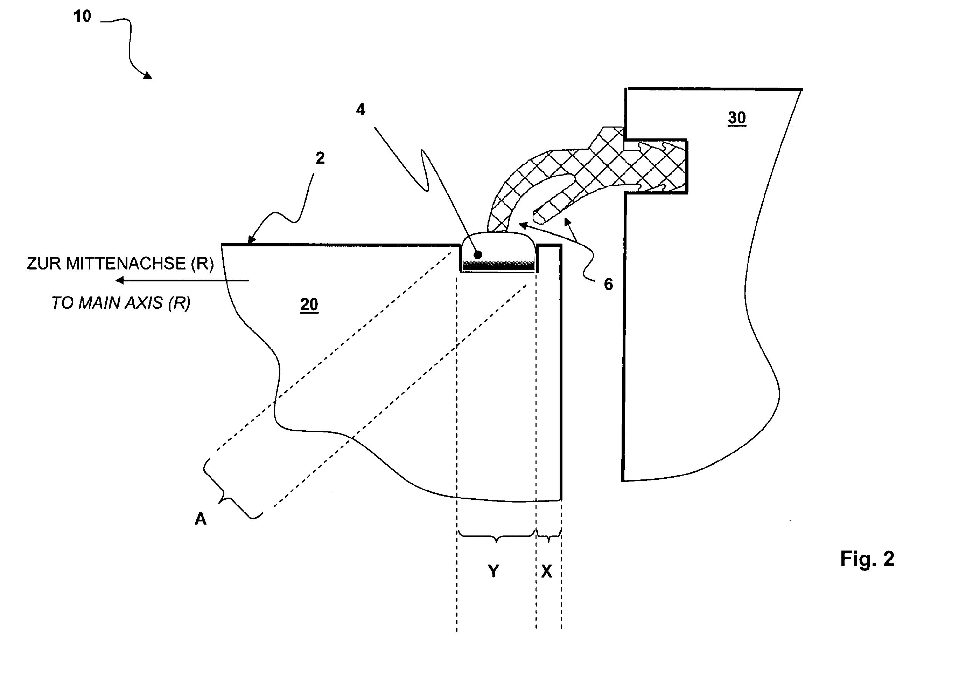

Fig. 2 den Ausschnitt (Detail) einer Lageranordnung aus Fig. 1 sowie ferner den korrespondierenden Ring oder Lagerring, welcher eine Spaltdichtung mit Dichtlippe enthält, wobei die Dichtlippe an Füllung bzw. Beschichtung/ Auftragsschicht mit Füllmaterial an einer radialen Fläche des inneren Rings oder Lagerrings kontaktiert.

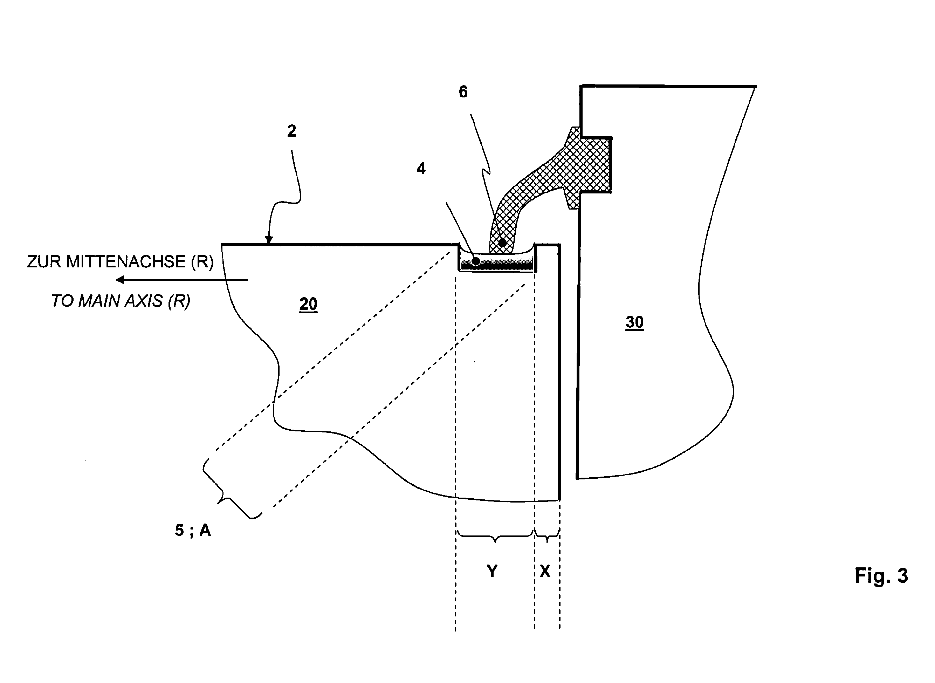

Fig. 3 einen Ausschnitt (Detail) einer Lageranordnung ähnlich der Fig. 2 mit einem korrespondierenden Ring oder Lagerring, welcher eine Spaltdichtung mit Dichtlippe enthält, wobei die Dichtlippe an Füllung bzw. Beschichtung/ Auftragsschicht mit Füllmaterial kontaktiert. Dabei ist die Füllung bzw. Beschichtung/ Auftragsschicht gegenüber der Ringoberfläche zurückgezogen (negativer Überstand), sodass in der Dichtungsanlauffläche eine Kuhle oder Vertiefung verbleibt.

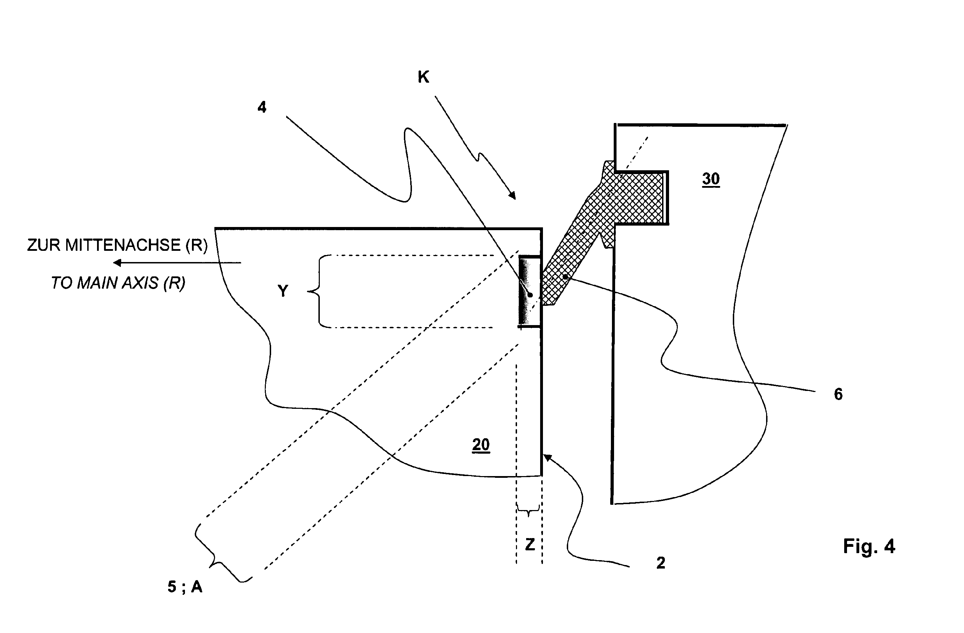

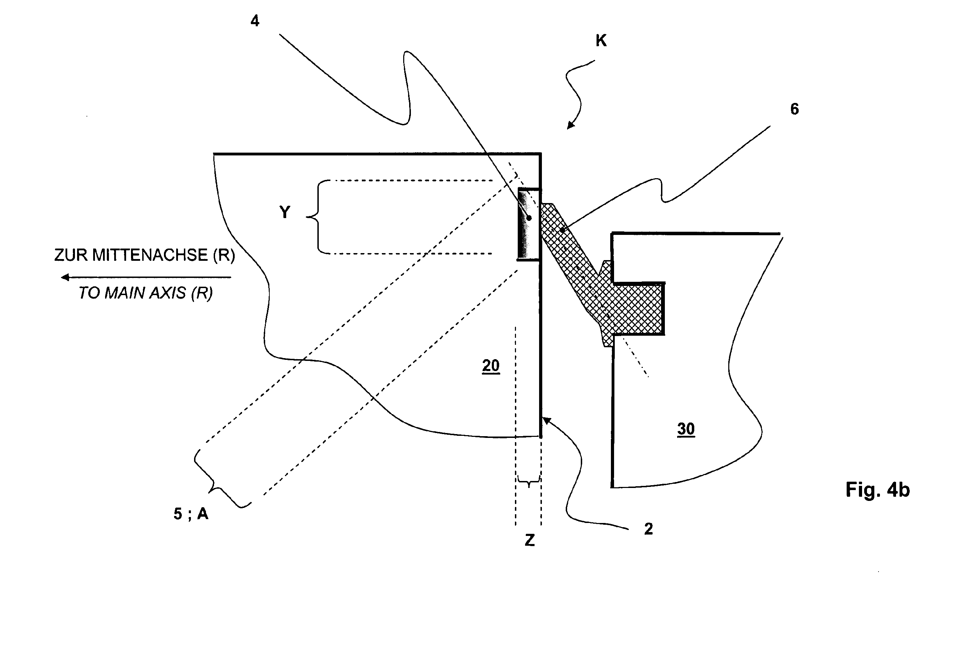

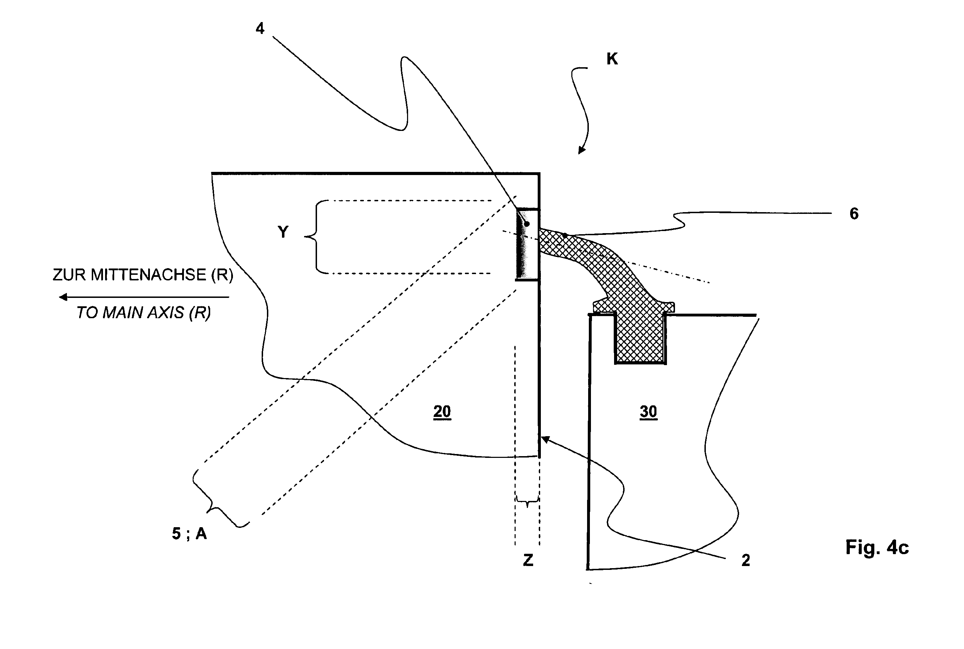

Fig. 4 einen Ausschnitt (Detail) einer Lageranordnung ähnlich der Fig. 3 mit einem korrespondierenden Ring oder Lagerring, welcher eine Spaltdichtung mit Dichtlippe enthält, wobei die Dichtlippe an Füllung bzw. Beschichtung/ Auftragsschicht mit Füllmaterial kontaktiert - hier jedoch an einer radialen Fläche des inneren Rings oder Lagerrings. Dabei ist die Füllung bzw. Beschichtung/ Auftragsschicht gegenüber der Ringoberfläche weder zurückgezogen (negativer Überstand) noch erhaben (positiver Überstand), sodass die Dichtungsanlauffläche auf gleicher radialer Ebene mit der Ringoberfläche liegt.
Fig. 4 b einen Ausschnitt (Detail) einer Lageranordnung analog der Fig. 4, jedoch mit einer Spaltdichtung, welche unter alternativ dargestelltem Winkel an der Dichtungsanlauffläche bzw. Füllung bzw. Beschichtung/ Auftragsschicht kontaktiert.
Fig. 4 c erneut einen Ausschnitt (Detail) einer Lageranordnung analog der Fig. 4 sowie der Fig. 4 b jedoch mit einer Spaltdichtung, deren Dichtlippe in etwa senkrecht an der Dichtungsanlauffläche bzw. Füllung bzw. Beschichtung/ Auftragsschicht kontaktiert.

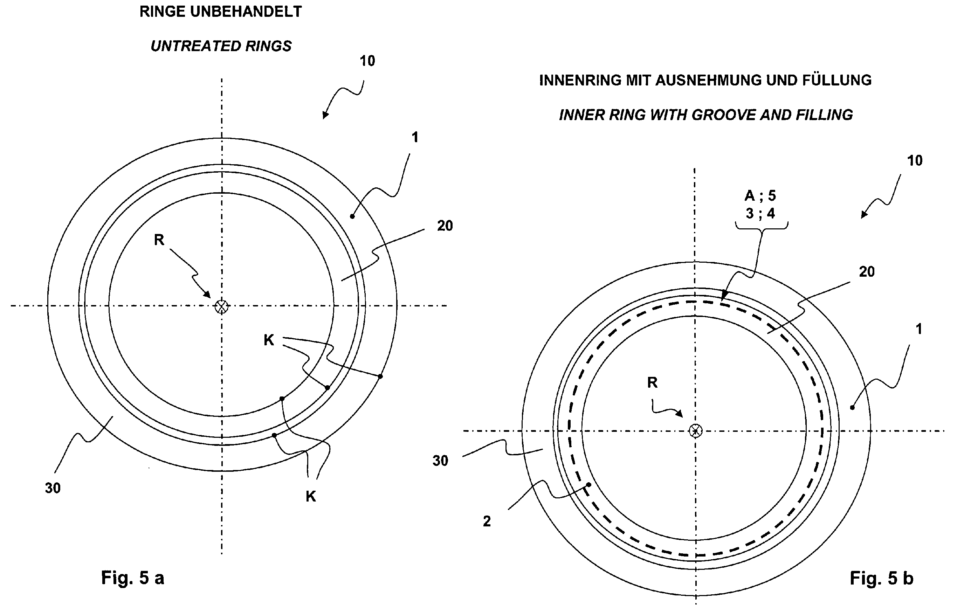

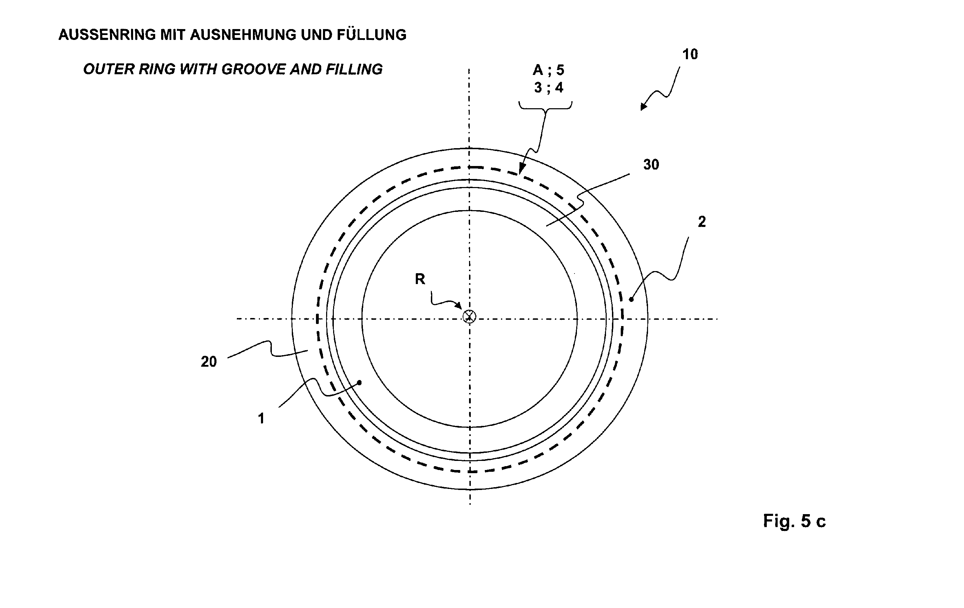

Fig. 5 a die schematische Draufsicht auf eine Lageranordnung nach herkömmlichen Stand der Technik mit zwei Ringen oder Lagerringen, welche um eine gemeinsame Rotationsachse verdrehbar gelagert sind, in unbehandeltem Zustand d.h. vor Einbringung einer Materialausnehmung bzw. Aussparung und Füllung, bzw. auch vor Einbringung oder Aufbringung der Beschichtung oder Auftragsschicht, ferner kennzeichnend die Außenkanten.
Fig. 5 b die schematische Draufsicht auf eine Lageranordnung mit zwei Ringen oder Lagerringen ähnlich Fig. 5 a, welche um eine gemeinsame Rotationsachse verdrehbar gelagert sind, jedoch in behandeltem Zustand d.h. nach Einbringung einer Materialausnehmung bzw. Aussparung und Füllung bzw. auch nach Einbringung oder Aufbringung der Beschichtung oder Auftragsschicht, welche beispielhaft axial zwischen Kanten des inneren Rings eingebracht wurde.
Fig. 5 c die schematische Draufsicht auf eine Lageranordnung mit zwei Ringen oder Lagerringen ähnlich Fig. 5 c, welche um eine gemeinsame Rotationsachse verdrehbar gelagert sind, in behandeltem Zustand d.h. nach Einbringung einer Materialausnehmung bzw. Aussparung und Füllung bzw. auch nach Einbringung oder Aufbringung der Beschichtung oder Auftragsschicht, welche beispielhaft axial zwischen den Kanten des äußeren Rings eingebracht wurde.

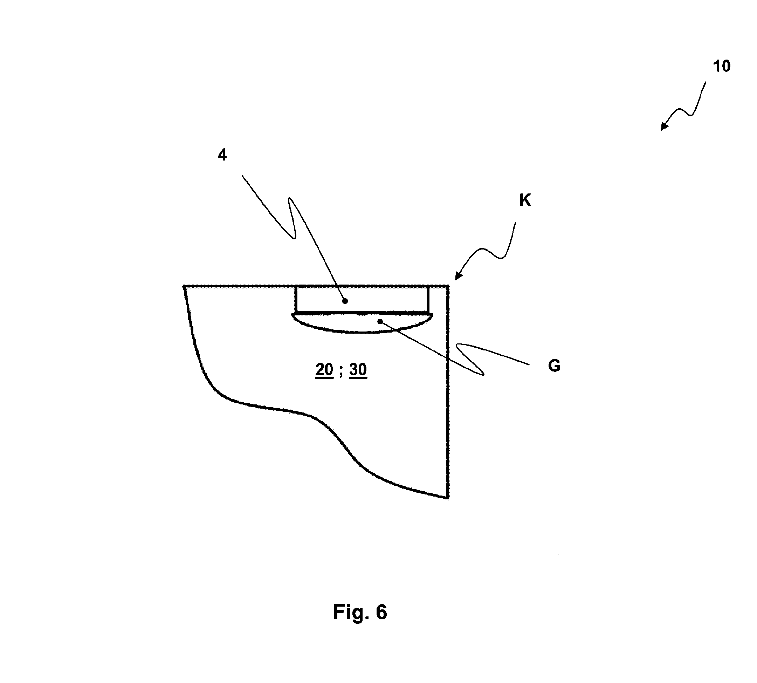

Fig. 6 ein Ausschnitt (Detail) einer Lageranordnung im Querschnitt an der Kante eines der Ringe oder Lagerringe, beinhaltend die Materialausnehmung und Füllung bzw. Beschichtung/ Auftragsschicht mit Füllmaterial und beispielhaft kennzeichnend den geänderten Gefügebereich unterhalb der Materialausnehmung bzw. Füllung bzw. unterhalb der Beschichtung/ Auftragsschicht.

In Fig. 1 wird dabei beispielsweise die Lageranordnung (10) im Querschnitt an der Kante (K) eines der Ringe (20) dargestellt. Die Materialausnehmung (5 ; A) ist mit Füllung (4) bzw. Beschichtung/ Auftragsschicht (3) mit Füllmaterial versehen. Dabei weist diese Füllung oder diese Beschichtung/ Auftragsschicht (3) einen positiven Überstand (Ü) gegenüber der Ringoberfläche (2) auf, sodass die Dichtungsanlauffläche gegenüber der Ringoberfläche (2) erhaben ist. In Fig. 1 ist klar ersichtlich dass die Ausnehmung (5 ; A) eine definierte Einbringungstiefe (Z) sowie eine eine klar definierte Einbringungsbreite (Y) besitzt. Die Ausnehmung (5 ; A) ist von der Kante (K) durch einen erkennbaren Randabstand (X) entfernt.

In Fig. 2 sowie Fig. 1 wird ferner der zum ersten Ring (20) ein korrespondierender Ring (30) der Lageranordnung (10) dargestellt, welcher eine Spaltdichtung mit mindestens einer Dichtlippe (6) enthält, wobei die jeweilige Dichtlippe (6) an Füllung (4) bzw. Beschichtung/ Auftragsschicht (3) mit Füllmaterial an einer radialen Fläche des inneren Rings oder Lagerrings kontaktiert. Während des gegenseitigen Verdrehens der Ringe (20 ; 30) zueinander kontaktiert die Dichtlippe (6) jeweils beispielsweise schleifend an der Füllung (4) bzw. Beschichtung/ Auftragsschicht (3), da die Dichtlippe (6) an nur einem der Ringe (20 ; 30) fixiert ist und sich daher mit gleicher Geschwindigkeit um den Ringmittelpunkt (R) dreht wie der Ring, in welchem sie fixiert ist.

In Fig. 3 wird ein weiterer Ausschnitt (Detail) einer Lageranordnung (10) ähnlich der Fig. 2 dargestellt wobei die Dichtlippe (6) an Füllung bzw. Beschichtung/Auftragsschicht (3) mit Füllmaterial (4) kontaktiert. Dabei ist die Füllung bzw. Beschichtung/ Auftragsschicht (3) gegenüber der Ringoberfläche (2) zurückgezogen (d.h. negativer Überstand), sodass in der Dichtungsanlauffläche eine Kuhle oder Vertiefung verbleibt.

In Fig. 4 hingegen wird ein Ausschnitt (Detail) einer Lageranordnung (10) ähnlich der Fig. 3 dargestellt. Hier jedoch ist die Füllung bzw. Beschichtung/ Auftragsschicht (3) an einer radialen Fläche des inneren Rings (20) oder Lagerrings an- oder eingebracht. Dabei ist diese Füllung bzw. Beschichtung/ Auftragsschicht (3) gegenüber der Ringoberfläche (2) weder zurückgezogen (negativer Überstand) noch erhaben (positiver Überstand), sodass die Dichtungsanlauffläche etwa auf gleicher radialer Ebene mit der Ringoberfläche (2) liegt. Fig. 4 b hingegen zeigt einen anderen Ausschnitt (Detail) einer Lageranordnung (10) analog der Fig. 4, jedoch mit einer Spaltdichtung, deren Dichtlippe (6) unter einem anderen Winkel an der Dichtungsanlauffläche bzw. an dem Füllmaterial (4) bzw. Beschichtung/Auftragsschicht (3) kontaktiert und anläuft. In Fig. 4 c bietet sich ein ähnliches Bild wie in der vorgenannten Figur, jedoch mit einer Spaltdichtung, deren Dichtlippe (6) in etwa senkrecht an der Dichtungsanlauffläche bzw. an dem Füllmaterial (4) bzw. Beschichtung/ Auftragsschicht (3) kontaktiert bzw. anliegt.

Fig. 5 a zeigt schematische Draufsicht einer Lageranordnung (10) nach herkömmlichen Stand der Technik mit zwei Ringen (20 ; 30) oder Lagerringen, welche um eine gemeinsame Rotationsachse (R) verdrehbar gelagert sind - und zwar in unbehandeltem Zustand d.h. vor Einbringung der Erfindung, kennzeichnend jeweils die Kanten (K) der Ringe (20 ; 30).

Fig. 5 b hingegen zeigt schematische die Draufsicht auf eine Lageranordnung mit zwei Ringen oder Lagerringen ähnlich Fig. 5 a, jedoch in behandeltem Zustand d.h. nach Einbringung der Erfindung. Die Materialausnehmung bzw. Aussparung (A ; 5) und Füllung mit Füllmaterial (4) bzw. die Beschichtung oder Auftragsschicht (3), wurde beispielhaft axial zwischen den Kanten (K) des innen liegenden Rings (30) eingebracht. Dabei ist die Materialausnehmung bzw. Aussparung (A ; 5) und Füllung mit Füllmaterial (4) bzw. die Beschichtung oder Auftragsschicht (3) symbolisch mit kreisförmig gestrichelter Linie dargestellt. In der Realität kann die Materialausnehmung (A) bzw. Aussparung (5) beispielsweise sowohl als vollumlaufende, d.h. über 360° der Ringoberfläche (2) umlaufende Ringnut ausgestaltet sein, als auch als eine teilumlaufende oder gar nur in Teilsegmenten der Ringoberfläche (2) eingearbeitete Materialausnehmung (A) bzw. Senke oder Aussparung (5). Beispielsweise kann sich in einer weiteren Ausgestaltungsform der Erfindung die Materialausnehmung (A) bzw. Senke oder Aussparung (5) nur über mehrere etwa 60° umspannende Teilsegmente erstrecken.

In Fig. 5 c ist die schematische Draufsicht auf eine Lageranordnung (10) mit zwei Ringen (20 ; 30) oder Lagerringen ähnlich der Fig. 5 c dargestellt, jedoch wurde die Ein- oder Aufbringung der Erfindung die Materialausnehmung (A) bzw. Senke oder Aussparung (5) beispielhaft axial zwischen den Kanten des äußeren Rings (30) vorgenommen.

Letztlich zeigt Fig. 6 ein Ausschnitt (Detail) der erfindungsgemäßen Lageranordnung (10) im Querschnitt an der Kante (K) eines der Ringe (20 ; 30) oder Lagerringe, beinhaltend die Materialausnehmung (A) und Füllung mit Füllmaterial (4) bzw. Beschichtung/ Auftragsschicht (3) mit Füllmaterial (4) und kennzeichnend den geänderten Gefügebereich (G) unterhalb der vorgenannten Materialausnehmung bzw. Füllung bzw. unterhalb der Beschichtung/ Auftragsschicht (3).

### Bezugszeichenliste:

- 1: Ringoberfläche, vorbehandelt
- 2: Ringoberfläche, behandelt
- 3: Beschichtung oder Auftragsschicht
- 4: Füllmaterial, z.B.: Metallpulver (geschmolzen)
- 5: Senke bzw. Aussparung
- 6: Dichtlippe
- 10: Lageranordnung
- 20: Ring
- 30: Ring
- A: Materialausnehmung
- K: Kante
- R: Mitten- oder Rotationsachse
- X: Randabstand
- Y: Einbringungsbreite der Materialausnehmung
- Z: Einbringungstiefe der Materialausnehmung
- U: Überstand gegenüber der Ringoberfläche
- G: Übergangszone mit geändertem Gefüge

## Patentansprüche

1. Lageranordnung (10), insbesondere zur gegeneinander verdrehbaren Lagerung mindestens zweier Ringe (20 ; 30), vorteilhafterweise zur Lagerung von Ringen aus metallischem Material, **aufweisend:**
wenigstens eine, vorzugsweise eine sich ringförmig oder zumindest ringsegmentförmig um eine Mitten- oder Rotationsachse (R) erstreckende, Materialausnehmung (A), alternativ ausgeführt als Senke oder Aussparung (5), beispielsweise in Form einer nut- oder kuhlenartigen Vertiefung mit definierter Einbringungstiefe (Z) und mit definierter Einbringungsbreite (Y) auf mindestens einer der Oberflächen (2) der Ringe (20 ; 30), vorzugsweise auf einer der radialen - oder axialen Oberflächen (2) mindestens eines Rings (20; 30), wobei die Materialausnehmung (A) oder Senke bzw. Aussparung (5) mit Füllmaterial (4) befüllt ist oder befüllt werden kann.

2. Lageranordnung (10) nach Anspruch 1
**gekennzeichnet dadurch, dass**
die befüllte Materialausnehmung (A) oder Senke bzw. Aussparung (5) in der Nähe oder in der unmittelbaren Umgebung einer Kante (K) oder angrenzend an wenigstens eine Kante (K) des wenigstens einen Rings (20 ; 30) an- oder eingebracht ist, alternativ etwa in mittig zwischen zwei Kanten (K) desselben Rings (20 ; 30) an- oder eingebracht ist.

3. Lageranordnung (10) nach Anspruch 1 oder 2
**gekennzeichnet dadurch, dass**
die Einbringungstiefe (Z) der Materialausnehmung (A) oder Senke bzw. Aussparung (5) wenigstens 0.25 mm beträgt, vorzugsweise mehr als 1 mm beträgt, idealerweise 2 mm oder mehr beträgt.

4. Lageranordnung (10) nach Anspruch 1 oder 2
**gekennzeichnet dadurch, dass**
die Einbringungsbreite (Y) der Materialausnehmung (A) oder Senke bzw. Aussparung (5) wenigstens 1 mm beträgt, vorzugsweise mehr als 5 mm beträgt, idealerweise 10 mm oder mehr beträgt.

5. Lageranordnung (10) nach Anspruch 1 oder 2
**gekennzeichnet dadurch, dass**
die Materialausnehmung (A) oder Senke bzw. Aussparung (5) in Form einer, zumindest segmentweise, ringförmig umlaufenden Vertiefung ausgeführt ist und), beispielsweise in Form einer nut- oder kuhlenartigen Vertiefung mit definierter Einbringungstiefe (Z) und mit definierter Einbringungsbreite (Y), befüllt ist oder befüllt werden kann mit metallischem oder einem Metall beinhaltenden, beispielsweise mit einem metallisch glänzenden, Füllmaterial (4).

6. Lageranordnung (10) nach vorgenanntem Anspruch
**gekennzeichnet dadurch, dass**
das Füllmaterial (4) vorzugsweise eine Metalllegierung ist, vorzugsweise aus einem geschmolzenen Metallpulver besteht, idealerweise beinhaltend Nickel-Anteile und/ oder Chrom-Anteile und/ oder Eisen-Anteile und/ oder Wolfram-Anteile und/oder Kupfer-Anteile und/ oder Bor-Anteile und/ oder Silizium-Anteile und/ oder Phospohor-Anteile, gegebenenfalls ferner beinhaltend Anteile eines Flussmittels.

7. Lageranordnung (10) nach wenigstens einem der beiden letztgenannten Ansprüche **gekennzeichnet dadurch, dass**
das Füllmaterial (4) beispielsweise eine aufgeschmolzene Metalllegierung ist aus einem Metallpulver mit zwischen 2 bis 15 Vol.-% Chrom-Anteilen oder gar mit bis zu 25 Vol.-% Chrom-Anteilen, alternativ eine aufgeschmolzene Metalllegierung aus Nickel-Bor-Silizium mit gegebenenfalls Chrom- bzw. Kupferanteilen.

8. Lageranordnung (10) nach wenigstens einem der drei letztgenannten Ansprüche **gekennzeichnet dadurch, dass**
das Füllmaterial (4) alternativ aus keramischen und/ oder anorganischen Werkstoff(en) besteht, wobei ein solcher anorganischer Werkstoff oder solche Werkstoffe hauptsächlich aus Silikaten und Oxiden besteht/en, beispielsweise Glas- oder Emaille.

9. Lageranordnung (10) nach wenigstens einem der vier letztgenannten Ansprüche **gekennzeichnet dadurch, dass**
das Füllmaterial (4) alternativ organisches Material, beispielsweise Kunststoff(e), beinhaltet oder gar überwiegend oder ausschließlich aus organischem Material, beispielsweise aus Kunststoff(en) besteht, insbesondere aus verschleiß- und temperaturbeständigen Kunststoff(en), wie beispielsweise Polyetheretherketon (PEEK), alternativ aus Fluorpolymeren oder deren Mischungen, beispielsweise aus Polytetrafluorethylen (PTFE bzw. PTFE-Compounds), oder aus Perfluoralkoxypolymeren (PFA), oder gar aus Polyethylen (PE), besteht.

10. Lageranordnung (10) nach wenigstens einem der fünf letztgenannten Ansprüche **gekennzeichnet dadurch, dass**
das Füllmaterial (4) ein Verbundwerkstoff ist und gegebenenfalls mit geeigneten Mitteln, beispielsweise formschlüssig etwa in Ausprägung einer Schwalbenschwanzgeometrie, oder kraftschlüssig etwa mittels Schraubung oder Nietung, an wenigstens einem Ring (20 ; 30) befestigbar ist, insbesondere unverrutschbar befestigbar ist.

11. Lageranordnung (10) nach wenigstens einem der vorgenannten Ansprüche **gekennzeichnet dadurch, dass**
das Füllmaterial (4) eine gegenüber dem Material des wenigstens einen Ringes (20 ; 30) oder gegenüber der Ringoberfläche (2) korrosions- und/ oder verschleißbeständige Beschichtung oder Auftragsschicht (3) ausbildet, beispielsweise mit einer Gesamtschichtdicke zwischen 0.2 mm und 7.5 mm, vorzugsweise mit einer Gesamtschichtdicke zwischen 0.5 mm und 1 mm.

12. Lageranordnung (10) nach wenigstens einem der vorgenannten Ansprüche **gekennzeichnet dadurch, dass**
die einer Gesamtschichtdicke des Füllmateriales (4) in der Materialausnehmung (A) oder Senke bzw. Aussparung (5) oder der Beschichtung oder Auftragsschicht (3), in axialer Richtung etwa der Einbringungstiefe (Z) der Materialausnehmung (A) oder Senke bzw. Aussparung (5) entspricht, gegebenenfalls der Gesamtschichtdicke des Füllmaterials (4) geringfügig übersteht, beispielsweise um etwa (Ü =) 0.1 bis 5 mm übersteht, alternativ geringfügig geringer ist als die Einbringungstiefe (Z).

13. Lageranordnung (10) nach wenigstens einem der vorgenannten Ansprüche **gekennzeichnet dadurch, dass**
das Füllmaterial (4) oder die Beschichtung oder Auftragsschicht (3), eine gegenüber dem Material des wenigstens einen Ringes (20 ; 30) korrosions- und/ oder verschleißbeständige Schicht mit Oberflächen-Schichthärte zwischen 250 und 860 Härte Vickers (HV), respektive zwischen 22 und 66 Härte Rockwell (HRC), ausbildet, vorzugsweise eine Oberflächen-Schichthärte zwischen 345 HV - 520 HV bzw. zwischen 35 HRC - 50 HRC ausbildet.

14. Lageranordnung (10) nach Anspruch 1 oder 2 **gekennzeichnet dadurch, dass**
das der Werkstoff wenigstens einer der Ringe (20; 30) einem der folgenden Werkstoffe entspricht: 25CrMo4, 42CrMo4, 43CrMo4, 34CrNiMo6, C45, C45N, X20Cr13, GG-20, GGG-40, GS15, St 37, sowie Edelstahl oder Halbedelstahl.

15. Lageranordnung (10) nach Anspruch 1 oder 2 **gekennzeichnet dadurch, dass**
die Lageranordnung (10) mit kugel-, zylinderrollen-, tonnenrollen-, oder kegelrollenförmige Wälzkörper ausgestattet ist und vorzugsweise als Wälzlager oder Momentenlager oder Großwälzlager ausgeprägt ist, alternativ als Drehverbindung ausgestaltet ist, beispielsweise für den Einsatz in oder auf Fahrzeugen, Werkzeugmaschinen, Schwerlastmaschinen, Transportmaschinen oder Kränen, in Windkraftanlagen oder energietechnischen Anlagen, sowie ,offshore' oder ,onshore', jeweils zwecks Relativverstellung mehrerer an- oder gegeneinander gelagerter Ringe (20 ; 30), insbesondere zweier an- oder gegeneinander gelagerter Wälzlagerringe.

16. Lageranordnung (10) nach Anspruch 1 oder 2 **gekennzeichnet dadurch, dass** die Materialausnehmung (A) mit einem Füllmaterial (4) befüllt ist, beispielsweise welches den korrespondierenden Gegenpart zu mindestens einer Dichtlippe (6) bildet, insbesondere welche bei Relativverstellung der gegeneinander verdrehbaren Ringe (20 ; 30) am Füllmaterial (4) kontaktiert oder anliegt, vorzugsweise abdichtend anliegt.

17. Lageranordnung (10) nach Anspruch 1 oder 2 **gekennzeichnet dadurch, dass** die Materialausnehmung (A) oder Senke bzw. Aussparung (5) einen Randabstand (X) zur Kante (K) von wenigstens 0.5 mm aufweist, vorzugsweise einen Randabstand (X) von mehr als 2.5 mm aufweist, idealerweise einen Randabstand (X) von mehr als 5 mm aufweist.

18. Lageranordnung (10) nach Anspruch 1 oder 2 **gekennzeichnet dadurch, dass** die Einbringungstiefe (Z) der Materialausnehmung (A) oder Senke bzw. Aussparung (5) höchstens 0.25 mm beträgt, gegebenenfalls sogar kaum messtechnisch erfassbar ist, während das Füllmaterial (A) überwiegend als Auftragsschicht auf den jeweiligen Ring (20 ; 30) aufgebracht ist, beispielsweise unter Ausprägung eines stetig ausgebildeten oder gekrümmt/konvex ausgebildeten oder stufenhaft ausgebildeten Überstandes (Ü) des Füllmateriales (A) gegenüber der Ringoberfläche (2).

19. Lageranordnung (10) nach mindestens einem der vorgenannten Ansprüche **gekennzeichnet dadurch, dass**
sich unterhalb der Materialausnehmung (A) oder unterhalb des Füllmaterials (4) im Material des wenigstens einen Ringes (20 ; 30) eine Übergangszone oder Übergangsschicht mit geändertem Gefüge (G) ergibt, beispielsweise eine in axialer Richtung 1-2 mm dicke und etwa ellipsen- oder linsenförmige Übergangszone oder Übergangsschicht, insbesondere welche eine Härte zwischen 50 HRC - 60 HRC aufweist.
